# EUROPÄISCHE PATENTSCHRIFT

(11) **EP 3 075 582 B1**
(45) Veröffentlichungstag und Bekanntmachung des Hinweises auf die Patenterteilung: **15.01.2020**
(21) Anmeldenummer: 16158350.5
(22) Anmeldetag: 03.03.2016
(51) Int. Cl.: B60H 1/00, F25B 30/02, F25B 6/04, B60H 1/32

(54) **TEMPERIERANORDNUNG FÜR EIN KRAFTFAHRZEUG UND VERFAHREN ZU DEREN BETRIEB**
TEMPERING ASSEMBLY FOR A MOTOR VEHICLE AND METHOD FOR OPERATING SAME
SYSTEME DE THERMOREGULATION DE VEHICULE AUTOMOBILE ET SON PROCEDE DE FONCTIONNEMENT

(30) Priorität: 02.04.2015 DE 102015206080
(43) Veröffentlichungstag der Anmeldung: 05.10.2016
(73) Patentinhaber: Volkswagen Aktiengesellschaft, 38440 Wolfsburg (DE)
(72) Erfinder: Albrecht, Jan-Christoph, 38442 Wolfsburg (DE); Wachsmuth, Cartsten, 38179 Lagesbüttel (DE)

(56) Entgegenhaltungen:
- DE-A1- 10 123 830
- DE-A1- 10 316 086

## Beschreibung

Temperieranordnung für ein Kraftfahrzeug und Verfahren zu deren Betrieb Die Erfindung bezieht sich auf eine Temperieranordnung für ein Kraftfahrzeug, umfassend
- eine Kühlmittelleitungsanordnung zur Zirkulation von Kühlmittel (nachfolgend synonym auch "Kühlkreis" genannt), umfassend einen Aufnahme-Wärmeübertrager zum Wärmeaustausch zwischen dem Kühlmittel und einem Antriebsaggregat des Kraftfahrzeugs sowie einen Heizungs-Wärmeübertrager zum Wärmeaustausch zwischen dem Kühlmittel und einem in eine Fahrgastzelle des Kraftfahrzeugs einleitbaren Luftstrom, sowie
- eine Kältemittelleitungsanordnung zur Zirkulation von Kältemittel (nachfolgend synonym auch "Kältekreis" genannt), umfassend einen Kompressor, einen dem Kompressor in Strömungsrichtung des Kältemittels nachgeschalteten Kondensator/Gaskühler, eine dem Kondensator/Gaskühler in Strömungsrichtung des Kältemittels nachgeschaltetes Entspannungsorgan und einen dem Entspannungsorgan in Strömungsrichtung des Kältemittels nachgeschalteten Verdampfer,
wobei die Kühlmittelleitungsanordnung und die Kältemittelleitungsanordnung mittels eines als Kühlmittel/Kältemittel-Wärmeübertrager ausgebildeten Kopplungs-Wärmeübertrager thermisch miteinander gekoppelt sind,
und wobei die Kühlmittelleitungsanordnung zwei Kühlmittelteilkreise, nämlich
- einen Motorkühlungs-Teilkreis, umfassend den Aufnahme-Wärmeübertrager, und
- einen Kabinenheizungs-Teilkreis, umfassend den Kopplungs-Wärmeübertrager und den Heizungs-Wärmeübertrager,
aufweist, die in einer ersten Schaltstellung einer Schaltventilanordnung voneinander getrennt und separat betreibbar sind.

Die Erfindung bezieht sich weiter auf ein Verfahren zum Betrieb einer derartigen Temperieranordnung.

Derartige Temperieranordnungen sind bekannt aus der DE 10 309 781 A1. Gattungsgemäße Temperieranordnungen zeigen zudem DE 101 23 830 A1 und DE 103 16 086 A1.

Kraftfahrzeuge weisen typischerweise im Wesentlichen zwei Kühlsysteme auf, nämlich ein Kühlsystem zur Kühlung der Fahrgastzelle und/oder eines Laderaums des Kraftfahrzeugs, sowie ein weiteres Kühlsystem zur Kühlung eines Antriebsaggregats des Kraftfahrzeugs, insbesondere einer Verbrennungskraftmaschine. Üblicherweise wird mittels des Motorkühlsystems von dem Antriebsaggregat abgeführte Wärme auch zur Heizung der Fahrgastzelle genutzt, sodass beide Systeme zu einer differenzierten Klimatisierung der Fahrgastzelle zusammenwirken. Die Systeme arbeiten auf Basis unterschiedlicher, bekannter Wirkprinzipien. Im Rahmen des Motorkühlsystems, im Wesentlichen realisiert durch den oben genannten Kühlkreis, erfolgt üblicherweise ein rein passiver Wärmeaustausch, wobei als Wärmeträger ein Kühlmittel, üblicherweise mit Additiven versetztes Wasser, verwendet wird. Das Fahrgastzellenkühlsystem, im Wesentlichen realisiert durch den oben genannten Kältekreis, beruht hingegen auf aktiver Verdichtung und Entspannung eines Kältemittels, welches dabei zyklische Phasenänderungen durchläuft. Zur Vermeidung von Verwechslungen werden die Begriffe "Kältemittel" und "Kühlmittel" nachfolgend konsequent im vorgenannten Sinne verwendet.

Gemeinhin sind beide Kühlsysteme konstruktiv voneinander getrennt und separat betreibbar. D.h. Basis des Fahrgastzellen-Kühlsystems ist eine Kältemittelleitungsanordnung, der Kältekreis; Basis des Motorkühlsystems ist eine Kühlmittelleitungsanordnung, der Kühlkreis. Die Kühlmittelleitungsanordnung dient der Zirkulation des Kühlmittels, wobei dieses einen Wärmeübertrager durchläuft, der geeignet ausgebildet ist, einen Wärmeaustausch zwischen dem Kühlmittel und dem Antriebsaggregat des Kraftfahrzeugs zu vermitteln. Da dieser Wärmeübertrager vorwiegend zur Aufnahme von Wärme aus dem Antriebsaggregat in das Kühlmittel dient, wird er nachfolgend als Aufnahme-Wärmeübertrager bezeichnet, wenngleich seine Funktionalität, wie weiter unten noch erläutert, nicht auf diese Aufgabe beschränkt ist. Weiter weist die Kühlmittelleitungsanordnung einen Luft/Kühlmittel-Wärmeübertrager auf, mittels dessen Wärme zwischen dem Kühlmittel und einem Luftstrom ausgetauscht werden kann, der im Anschluss in die Fahrgastzelle eingeblasen werden kann. Bei der typischen Anwendung wird der Luftstrom durch diesen Wärmeaustausch erhitzt und dient der Heizung der Fahrgastzelle. Der entsprechende Wärmeübertrager wird daher nachfolgend als Heizungs-Wärmeübertrager bezeichnet, wenngleich seine Funktionalität nicht auf die vorgenannte Aufgabe beschränkt ist. Bei der in der oben genannten, gattungsbildenden Druckschrift offenbarten Vorrichtung besteht die Hauptaufgabe sogar vielmehr in der Abführung der vom Motor aufgenommenen Wärme aus dem Kühlmittel. Die Aufheizung der Fahrgastzelle ist dabei lediglich ein günstiger Nebeneffekt, der eintritt, wenn der den Heizungs-Wärmeübertrager durchsetzende Luftstrom, wie erläutert in die Fahrgastzelle und nicht etwa in die Fahrzeugumgebung geblasen wird.

Die Kältemittelleitungsanordnung dient dagegen der Zirkulation des Kältemittels und umfasst einen Kompressor, einen Kondensator/Gaskühler, ein Entspannungsorgan und einen Verdampfer, die in der genannten Reihenfolge in Strömungsrichtung des Kältemittels angeordnet sind. Die Wirkungsweise eines derartigen Kältekreises ist dem Fachmann bekannt. Insbesondere wird gasförmiges Kältemittel im Kompressor komprimiert und dabei erhitzt; im Kondensator/Gaskühler, der häufig als Luft/Kältemittel-Wämeübertrager ausgebildet ist, wird es unter Wärmeabfuhr verflüssigt. Die tatsächliche Verflüssigung des Kältemittels ist jedoch nicht zwingend erforderlich; im Hinblick auf den zunehmenden Einsatz transkritischer Kältemittel kommt auch eine reine Abkühlung des gasförmigen Kältemittels in Betracht. In diesem Sinne ist die hier verwendete Terminologie "Kondensator/Gaskühler" zu verstehen. Das komprimierte, flüssige Kältemittel wird in dem Entspannungsorgan, beispielsweise einem Drosselventil, entspannt und im Verdampfer, der typischerweise ebenfalls als Luft/Kältemittel-Wärmeübertrager ausgebildet ist, unter Wärmeaufnahme verdampft. Die aufgenommene Wärme wird dabei z.B. einem den Verdampfer durchsetzenden Luftstrom entzogen, der dadurch abgekühlt wird und zur Kühlung der Fahrgastzelle in diese eingeblasen werden kann. Üblicherweise handelt es sich um denselben Luftstrom, der wenigstens teilweise, wie oben erläutert, auch den Heizungs-Wärmeübertrager durchsetzt, sodass ein präzise temperierter, entfeuchteter Luftstrom in die Fahrgastzelle eingeblasen werden kann.

Über diese Basisfunktionalitäten hinausgehend weist die in der oben genannten, gattungsbildenden Druckschrift offenbarte Temperieranordnung weiter eine sogenannte Kaltstart-Funktionalität auf. Hierzu weisen sowohl der Kältekreis als auch der Kühlkreis eine Anzahl von Schaltventilen auf. So ist der Kühlkreis in zwei Teilkreise, nämlich einen Motorkühlungs-Teilkreis und einen Kabinenheizungs-Teilkreis unterteilt, die je nach Schaltstellung der entsprechenden Schaltventile voneinander getrennt und separat betreibbar oder zu einem einzigen Kühlkreis zusammengeschaltet sind. Die oben erläuterte Basisfunktionalität des Motorkühlsystems erfolgt im zusammengeschalteten Zustand der Teilkreise. Lediglich bei der nachfolgend beschriebenen Kaltstartfunktionalität sind die Teilkreise voneinander getrennt. Zugleich werden dabei die Schaltventile des Kältekreises so geschaltet, dass der Kondensator/Gaskühler und der Verdampfer umgangen werden. Statt dessen durchströmt das Kältemittel je einen Kopplungs-Wärmeübertrager, d.h. je einen Kühlmittel/Kältemittel-Wärmeübertrager, der den Kältekreis und den Kühlkreis thermisch miteinander koppelt. Insbesondere koppelt der im Umgehungspfad des Kondensators/Gaskühlers angeordnete Koppel-Wärmeübertrager den Kältekreis mit dem Kabinenheizungs-Teilkreis; der im Umgehungspfad des Verdampfers angeordnete Koppel-Wärmeübertrager koppelt den Kältekreis hingegen mit dem Motorkühlungsteilkreis. Dem liegt die Erkenntnis zugrunde, dass es zur Aufheizung des Kühlmittels aus der Abwärme des Antriebsaggregates einer vergleichsweise langen Zeit bedarf. Dies ist insbesondere bei kalten Außentemperaturen und modernen, effizient arbeitenden Verbrennungskraftmaschinen der Fall. Eine Aufheizung des Kältemittels durch Kompression im Kompressor erfolgt hingegen vergleichsweise schnell. Anders als im Kühlfall (Basisfunktionalität des Fahrgastzellen-Kühlsystems) wird jedoch auf Kondensation und Verdampfung verzichtet; vielmehr wird die Wärme des Kältemittels über die beiden Koppel-Wärmeübertrager an das Kühlmittel abgegeben, wobei dies nach den Kühlmittel-Teilkreisen getrennt erfolgt, z.B. um auf unterschiedliche Präferenzen hinsichtlich Kabinenkomfort bzw. Motoreffizienz reagieren zu können.

Nachteilig bei der bekannten Vorrichtung ist zum einen das Erfordernis etlicher Schaltventile in dem druckbeaufschlagten Kältekreis, was im Vergleich zu Schaltventilen im drucklosen Kühlkreis konstruktiv und unter Kostenaspekten wesentlich aufwendiger ist. Zum anderen ist unter Kosten- und Bauraumaspekten die Notwendigkeit zweier Kopplungs-Wärmeübertrager nachteilig.

Es ist die Aufgabe der vorliegenden Erfindung eine gattungsgemäße Temperieranordnung derart weiterzubilden, dass eine konstruktiv vereinfachte, kostengünstigere Vorrichtung resultiert, für die zugleich ein bevorzugtes Betriebsverfahren angegeben werden soll.

Diese Aufgabe wird durch die Merkmale von Anspruch 1 dadurch gelöst, dass
- der Kopplungs-Wärmeübertrager und der Kondensator/Gaskühler in der Kältemittelleitungsanordnung in Reihe zueinander geschaltet sind und
- der Motorkühlungs-Teilkreis weiter einen Abgabe-Wärmeübertrager zum Wärmeaustausch zwischen dem Kühlmittel und einer externen Wärmesenke aufweist, der in einer zweiten Schaltstellung der Schaltventilanordnung, in der die beiden Teilkreise der Kühlmittelleitungsanordnung miteinander verbunden sind, als gemeinsames Element beider Teilkreise geschaltet ist.

Bevorzugte Ausführungsformen dieses Erfindungsaspektes sind Gegenstand der abhängigen Vorrichtungsansprüche.

Zunächst kommt die Erfindung mit einem einzelnen Kopplungs-Wärmeübertrager aus, der die Kältemittelleitungsanordnung mit dem Kabinenheizungs-Teilkreis der Kühlmittelleitungsanordnung koppelt. Eine fallweise gewünschte oder nicht gewünschte Kopplung (auch) mit dem Motorkühlungs-Teilkreis kann durch Schaltung von Schaltventilen allein im Kühlkreis realisiert werden. Sodann ist der Kopplungs-Wärmeübertrager in Reihe zum Kondensator/Gaskühler geschaltet. Eine Umgehung des Kondensators/Gaskühlers oder des Verdampfers ist im Rahmen der Erfindung also nicht erforderlich. Dies erlaubt es, auf entsprechende Schaltventile im Kältekreis zu verzichten. Vielmehr wird der Kopplungs-Wärmeübertrager dauerhaft mit Kältemittel durchströmt. Welche konkrete Wirkung er dabei entfaltet, hängt von der Temperaturdifferenz zwischen Kältemittel und Kühlmittel sowie von der über die Schaltventile der Kühlmittelleitungsanordnung vorzugsweise steuerbaren Durchflussmenge an Kühlmittel ab. Auf die einzelnen Fälle soll weiter unten näher eingegangen werden.

Gemäß der vorliegenden Erfindung wird in der Kühlmittelleitungsanordnung ein vorzugsweise als Luft/Kühlmittel-Wärmübertrager ausgebildeter, zusätzlicher Wärmeübertrager vorgesehen, der den Motorkühlungs-Teilkreis unabhängig vom Heizungs- und vom Kopplungs-Wärmeübertrager macht. Dieser dient im Wesentlichen dazu, Wärme des Kühlmittels an eine externe Wärmesenke, beispielsweise die Fahrzeugumgebung, abzugeben, weshalb er hier als Abgabe-Wärmeübertrager bezeichnet wird. Der Abgabe-Wärmeübertrager befindet sich an einer zentralen Stelle der Kühlmittelleitungsanordnung. Im hier als erste Schaltstellung bezeichneten Schaltzustand der Schaltventile in der Kühlmittelleitungsanordnung, in dem die beiden Teilkreise voneinander getrennt und separat betreibbar sind, wird der Abgabe-Wärmeübertrager allein von Kühlmittel aus dem Aufnahme-Wärmeübertrager durchströmt. Im hier als zweite Schaltstellung bezeichneten Schaltzustand der Schaltventile der Kühlmittelleitungsanordnung, in dem beide Teilkreise zu einem gemeinsamen Kühlmittelkreis vereinigt sind, laufen hingegen Kühlmittelströme aus beiden Teilkreisen vor dem Abgabe-Wärmeübertrager zusammen und durchströmen diesen gemeinsam. Hinter dem Abgabe-Wärmeübertrager wird der vereinheitlichte Kühlmittelstrom wieder in beide Teilkreise aufgespaltet.

Die aus dieser erfindungsgemäßen Anordnung resultierenden Funktionalitäten sollen nachfolgend im Einzelnen erläutert werden.

Im Normalbetrieb befindet sich die Anordnung in der zweiten Schaltstellung, d.h. beide Teilkreise der Kühlmittelleitungsanordnung sind vereinigt, wobei der Abgabe-Wärmeübertrager von Teilströmen aus beiden Teilkreisen gemeinsam durchflossen wird. In diesem Normalbetrieb weist das Kühlwasser eine Temperatur von ca. 90°C auf, wobei die hierfür notwendige Wärme als Abwärme aus dem Motor über den Aufnahme-Wärmeübertrager aufgenommen und überschüssige Wärme über den Abgabe-Wärmeübertrager abgegeben wird. Typischerweise sind Aufnahme- und Abgabe-Wärmeübertrager für Wärmeleistungen von ca. 100 kW vergleichsweise groß ausgelegt. In der Kältemittelleitungsanordnung, die typischerweise deutlich kleiner, z.B. auf ca. 7 kW, ausgelegt ist, wird, wie eingangs erläutert, Kältemittel im Kompressor komprimiert, wobei Temperaturen von deutlich über 90°C, typischerweise bis ca. 130°C oder zeitweise sogar darüber, erreicht werden. Im Kopplungs-Wärmeübertrager erfolgt daher ein Wärmeübergang vom Kältemittel zum Kühlmittel, was eine Vorkühlung des Kältemittels vor dessen Eintritt in den Kondensator/Gaskühler bedeutet. Insgesamt kann also mehr Wärme aus dem Kältemittel abgeführt werden, als dies durch alleinige Wirkung des Kondensators/Gaskühlers möglich wäre. Entsprechend wird die erzielbare Kühlleistung bzw. die Effizienz der Fahrgastzellenkühlung gesteigert. Ganz besonders kommt diese Effizienzsteigerung in Hochlastsituationen der Klimaanlage zur Geltung, z.B. im Szenario "Sommerstau", d.h. bei hohen Außentemperaturen und geringen Geschwindigkeiten, was zum einen mit einer niedrigen Kühlmitteltemperatur und zum anderen mit einer geringen Durchströmung des Kondensators/Gaskühlers mit Kühlluft verbunden ist. In einem solchen Szenario kann das Kühlmittel als Wärmesenke für das Kältemittel dienen, wobei die zusätzlich aufgenommene Wärme problemlos über den groß ausgelegten Abgabe-Wärmeübertrager abgeführt werden kann. Eine erhebliche Komfortverbesserung im "Sommerstau"-Szenario ist die Folge.

Auch beim "Kaltstart"-Szenario wird die erfindungsgemäße Anordnung in der zweiten Schaltstellung, d.h. bei vereinigten Teilkreisen der Kühlmittelleitungsanordnung, betrieben. Hier ist das Kühlmittel noch sehr kalt, da es noch keine Gelegenheit hatte, von der Abwärme des Motors erwärmt zu werden. Stattdessen wird der Kompressor betrieben, um das Kältemittel aufzuheizen, dessen Wärme über den Kopplungs-Wärmeübertrager an das Kühlmittel abgeführt wird. Dieses vorgewärmte Kühlmittel durchströmt dann den Heizungs-Wärmeübertrager sowie den Aufnahme-Wärmeübertrager, der in diesem Fall in umgekehrter Weise zur Erwärmung des Motors dient. Bei einer Variante kann ein Absperrorgan vor dem Abgabe-Wärmeübertrager kann dazu genutzt werden, zu verhindern, dass Wärme an die Umgebung abgegeben wird. Beide Kühlmittel-Teilkreise sind dabei zu einem den Abgabe-Wärmeübertrager umgehenden Kühlmittelkreis vereinigt. Hierzu bedarf es jedoch der Flussrichtungsumkehr in einem der Kühlmittel-Teilkreise.

Wird hingegen auf die Motorvorwärmung kein Wert, auf eine Schnellheizung der Fahrgastzelle jedoch großer Wert gelegt, kann das System im "Kaltstart"-Szenario auch in der ersten Schaltstellung, d.h. bei getrennten Teilkreisen der Kühlmittelleitungsanordnung, betrieben werden. In diesem Fall wird das über den Kopplungs-Wärmeübertrager vorgewärmte Kühlmittel ausschließlich zum Durchfluss durch den Heizungs-Wärmeübertrager, d.h. zum Heizen der Fahrgastzelle, genutzt. Der Motorkühlungs-Teilkreis läuft separat. Zur schnelleren Erwärmung ist es denkbar, über geeignete Schaltventile den Abgabe-Wärmeübertrager wenigstens zeitweise zu umgehen.

Zugleich ist das Kühlmittel auf Grund der Schaltbarkeit der Kühlmittelleitungsanordnung zuverlässig vor einer Überhitzung geschützt, die zur Zersetzung der Additive oder zur Dampfbildung in der Kühlmittelleitungsanordnung führen könnte. Beim Hochbetrieb des Kompressors können zwar Kältemitteltemperaturen von über 130°C auftreten. Die entsprechende Wärme kann jedoch durch reichlichen Durchfluss von Kühlmittel durch den Kopplungs-Wärmeübertrager abgeführt werden, wobei sie über den großen Abgabe-Wärmeübertrager zuverlässig auch aus dem Kühlmittelkreis abgeführt wird.

Die oben genannten Funktionalitäten können besonders vorteilhaft erzielt werden, wenn die erfindungsgemäße Temperieranordnung gemäß einem erfindungsgemäßen Betriebsverfahren derart betrieben wird, dass im Fall, dass am jeweiligen Eingang des Kopplungs-Wärmeübertragers die Temperatur des Kühlmittels höher ist als die Temperatur des Kältemittels, die erste Schaltstellung der Ventilanordnung eingestellt wird und im Fall, dass am jeweiligen Eingang des Kopplungs-Wärmeübertragers die Temperatur des Kühlmittels niedriger ist als die Temperatur des Kältemittels die zweite Schaltstellung der Schaltventilanordnung eingestellt wird. Mit anderen Worten werden also im Fall, dass das Kühlmittel wärmer ist als das Kältemittel, die beiden Teilkreise der Kühlmittelleitungsanordnung voneinander getrennt, sodass Wärme des Kühlmittels im Kabinenheizungs-Teilkreis an das Kältemittel abgegeben wird und das Kühlmittel ggf. zusätzlich dadurch gekühlt wird, dass Kaltluft vom Verdampfer durch den Heizungs-Wärmeübertrager strömt. Die Motorkühlung wird in diesem Fall hinreichend von der Wechselwirkung aus Aufnahme- und Abgabe-Wärmeübertrager erledigt. Im Fall jedoch, dass das Kühlmittel kälter ist als das Kältemittel kann es aus Gründen der Effizienzsteigerung der Klimaanlage zur Vorkühlung des Kältemittels genutzt werden, wozu bevorzugt die Teilkreise der Kühlmittelleitungsanordnung miteinander verbunden werden, sodass der Abgabe-Wärmeübertrager auch zur Abgabe von Wärme aus dem Kältemittelkreis genutzt werden kann. Der Fachmann wird erkennen, dass zu dieser erfindungsgemäßen Steuerung geeignete Temperatursensoren, insbesondere im Bereich des Kühl- bzw. Kältemitteleinlasses oder -auslasses des Kopplungs-Wärmeübertragers erforderlich sind. Der Fachmann wird weiter verstehen, dass diese erfindungsgemäße, grundsätzliche Verfahrensauslegung einer anderen Ansteuerung im bedarfsweisen Einzelfall nicht entgegensteht.

Bei einer bevorzugten Weiterbildung der erfindungsgemäßen Temperieranordnung ist vorgesehen, dass in der zweiten Schaltstellung der Schaltventilanordnung der Abgabe-Wärmeübertrager sowohl dem Aufnahme-Wärmeübertrager als auch dem Heizungs-Wärmeübertrager in Strömungsrichtung des Kühlmittels nachgeschaltet ist. Mit anderen Worten laufen, wie oben bereits erläutert, die Teilkreise vor dem Abgabe-Wärmeübertrager zusammen. Dabei ist es besonders günstig, wenn das Mengenverhältnis der aus dem Kabinenheizungs- und Motorkühlungs-Teilkreis stammenden Anteile des den Abgabe-Wärmeübertrager in der zweiten Schaltstellung durchströmenden Kühlmittels einstellbar ist. Hierzu können bspw. im Verbindungspunkt der Teilkreise vor dem Abgabe-Wärmeübertrager entsprechende Steuerventile vorgesehen sein.

Als günstig wird ebenso angesehen, wenn in der zweiten Schaltstellung der Schaltventilanordnung sowohl der Kopplungs-Wärmeübertrager als auch der Aufnahme-Wärmeübertrager dem Abgabe-Wärmeübertrager in Strömungsrichtung des Kühlmittels nachgeschaltet ist. Dies bedeutet, wie oben bereits erläutert, dass sich der gemeinsame Kühlmittelstrom hinter dem Abgabe-Wärmeübertrager wieder in die einzelnen Teilkreise aufspaltet. Dabei wird es als besonders günstig angesehen, wenn das Mengenverhältnis der aus dem Abgabe-Wärmeübertrager in den Aufnahme-Wärmeübertrager einerseits und in den Kopplungs-Wärmeübertrager andererseits strömenden Anteile des den Abgabe-Wärmeübertrager in der zweiten Schaltstellung durchströmenden Kühlmittels einstellbar ist. Hierzu können am Verzweigungspunkt der Teilkreise entsprechende Steuerventile vorgesehen sein.

In beiden Fällen dient die Steuerbarkeit der Mengenverhältnisse der Differenzierung der Beiträge zur Gesamt-Wärmeab- und -zufuhr, die beide Teilkreise, hier insbesondere der Kopplungs-Wärmeübertrager einerseits, und der Aufnahme-Wärmeübertrager andererseits, leisten. Damit kann situationsgerecht auf die jeweiligen Betriebszustände des Motors und der Klimaanlage unter Berücksichtigung der Komfort-Anforderungen der Fahrzeuginsassen und der Außentemperaturen und fahrgeschwindigkeitsabhängigen Luftströmungsmengen reagiert und eine optimale Systemeffizienz erzielt werden.

Bevorzugt ist, wie bereits erwähnt, der Verdampfer als Luft/Kältemittel-Wärmeübertrager und der Heizungs-Wärmeübertrager als Luft/Kühlmittel-Wärmeübertrager ausgebildet, wobei beide luftseitig miteinander gekoppelt sind und der Heizungs-Wärmeübertrager dem Verdampfer in Luftströmungsrichtung nachgeschaltet ist. Mit anderen Worten kann der Heizungs-Wärmeübertrager als Gegenheizer zum Verdampfer genutzt werden, sodass auch in Fällen, in denen keine Kabinenkühlung verlangt wird, die Klimaanlage dennoch zur Entfeuchtung der Kabinenluft genutzt werden kann.

Weitere Merkmale und Vorteile der Erfindung ergeben sich aus der nachfolgenden, speziellen Beschreibung und den Zeichnungen.

Es zeigen:
- Figur 1:: eine schematische Darstellung einer erfindungsgemäßen Temperieranordnung in ihrer ersten Schaltstellung
- Figur 2:: eine schematische Darstellung einer erfindungsgemäßen Temperieranordnung in ihrer zweiten Schaltstellung.

Gleiche Bezugszeichen in den Figuren weisen auf gleiche oder analoge Elemente hin.

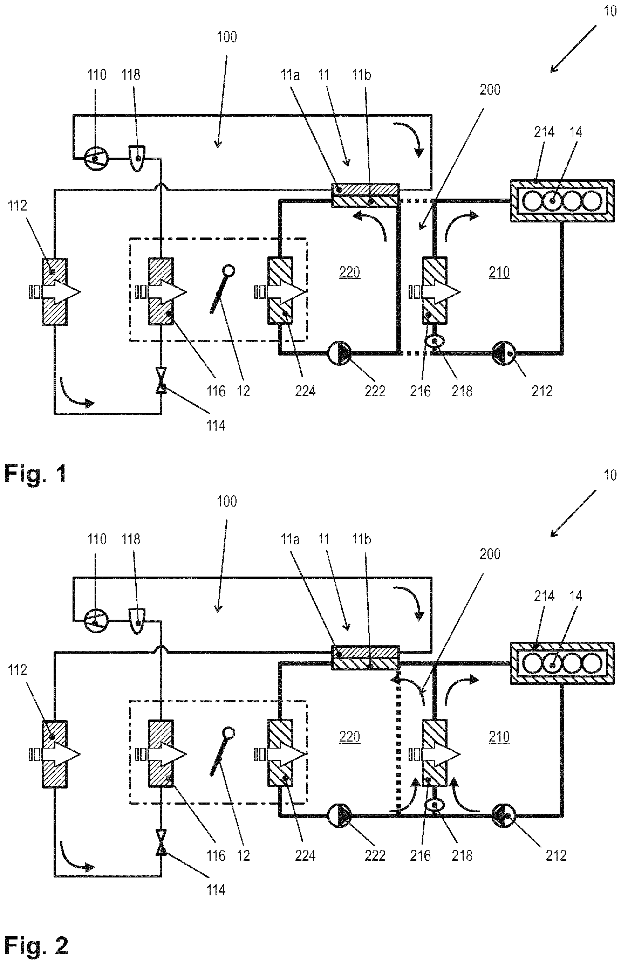

Die Figuren 1 und 2 zeigen eine Ausführungsform einer erfindungsgemäßen Temperieranordnung 10 in ihren zwei möglichen Schaltstellungen. Figur 1 zeigt die Temperieranordnung in ihrer ersten Schaltstellung, Figur 2 zeigt die Temperieranordnung 10 in ihrer zweiten Schaltstellung. Beide Figuren sollen nachfolgend, soweit identisch, gemeinsam diskutiert werden.

Die Temperieranordnung 10 umfasst eine Kältemittelleitungsanordnung (Kältekreis) 100 und eine Kühlmittelleitungsanordnung (Kühlkreis) 200. Die primäre Aufgabe der Kältemittelleitungsanordnung 100 ist die Kühlung einer nicht dargestellten Fahrgastzelle eines Kraftfahrzeugs. Die Kältemittelleitungsanordnung 100 umfasst in grundsätzlich bekannter Weise einen Kompressor 110, in dem gasförmiges Kältemittel komprimiert werden kann. Das komprimierte Kältemittel wird in einem Kondensator/Gaskühler 112 der in der gezeigten Ausführungsform als Luft/Kältemittel-Wärmeübertrager ausgebildet ist, verflüssigt. In einem Entspannungsorgan 114, welches bei der gezeigten Ausführungsform als Drosselventil ausgebildet ist, wird das verflüssigte Kältemittel entspannt und in einem Verdampfer 116, der bei der gezeigten Ausführungsform als Luft/Kältemittel-Wärmeübertrager ausgebildet ist, unter Erzeugung von Verdunstungskälte, welche dem den Verdampfer 116 durchsetzenden Luftstrom entzogen wird, verdampft. Im Anschluss wird das Kältemittel zum Kompressor 110 zurückgeleitet, wobei es einen Trockner 118 passieren kann. Der den Verdampfer 116 durchsetzende Luftstrom kann direkt zur Kühlung der Fahrgastzelle in diese eingeleitet werden. Es ist jedoch auch möglich, ihn über einen weiter unten beschriebenen Gegenheizer wenigsten graduell wieder aufzuheizen, um eine Entfeuchtung bei moderater Kühlung oder gar Erwärmung der Fahrgastzelle zu erzielen. Zur bestimmungsgemäßen Leitung des Luftstroms sind rein schematisch angedeutete Luftleitmittel 12 vorgesehen.

Zusätzlich ist in die Kältemittelleitungsanordnung 100 ein Kopplungs-Wärmeübertrager 11 integriert. Dieser ist als Kühlmittel/Kältemittel Wärmeübertrager ausgebildet, dessen kältemittelseitiger Teil 11a Bestandteil der Kältemittelleitungsanordnung 100 und dessen kühlmittelseitiger Teil 11b Bestandteil der nachfolgend beschriebenen Kühlmittelleitungsanordnung 200 ist. Der Kopplungs-Wärmeübertrager 11 ist geeignet und bestimmt, Wärme zwischen der Kältemittelleitungsanordnung 100 und der Kühlmittelleitungsanordnung 200 auszutauschen.

Die Kühlmittelleitungsanordnung 200 umfasst, wie insbesondere in Figur 1 deutlich wird, zwei Teilkreise, nämlich einen Motorkühlungs-Teilkreis 210 und einen Kabinenheizungs-Teilkreis 220.

Der Motorkühlungsteilkreis 210 umfasst eine Kühlmittelpumpe 212, welche das Kühlmittel in der in Figur 1 dargestellten ersten Schaltstellung von einem Aufnahme-Wärmeübertrager 214 zu einem Abgabe-Wärmeübertrager 216 und zum Aufnahme-Wärmeübertrager 214 zurück zirkulieren lässt. Der Aufnahme-Wärmeübertrager 214 ist typischerweise als ein eine Verbrennungskraftmaschine 14 des Kraftfahrzeugs thermisch kontaktierendes Leitungssystem, welches geeignet ausgelegt ist, die Abwärme der Verbrennungskraftmaschine 14 an das zirkulierende Kühlmittel zu übertragen. Der Abgabe-Wärmeübertrager 216 ist bei der gezeigten Ausführungsform als Luft/Kühlmittel-Wärmeübertrager hoher Kapazität ausgelegt. Typische Wärmeabgabe-Leistungswerte des Abgabe-Wärmübertragers 216 liegen bei ca. 100 kW. Die primäre Aufgabe des Motorkühlungs-Teilkreises 210 liegt in der Stabilisierung der Temperatur der Verbrennungskraftmaschine 14 bei deren optimaler Betriebstemperatur. In den Figuren nicht dargestellt sind bei bestimmten Ausführungsformen realisierte Umgehungsmöglichkeiten des Abgabe-Wärmeübertragers 216, die bspw. in grundsätzlich bekannter Weise mittels eines Thermostaten betätigt werden können und insbesondere in Kaltstart-Szenarien eine schnellere Erwärmung der Verbrennungskraftmaschine 14 durch Verkleinerung des Motorkühlungs-Teilkreises 210 bewirken können.

Der Kabinenheizungs-Teilkreis 220 umfasst ebenfalls eine Kühlmittelpumpe 222, die in der in Figur 1 gezeigten ersten Schaltstellung das Kühlmittel von dem kühlmittelseitigen Teil 11b des Kopplungs-Wärmeübertragers 11 zu einem Heizungs-Wärmeübertrager 224 und zum kühlmittelseitigen Teil 11b des Kopplungs-Wärmeübertragers 11 zurück zirkulieren lässt. Der Heizungs-Wärmeübertrager 224 ist bei der gezeigten Ausführungsform als Luft/Kühlmittel-Wärmeübertrager ausgebildet, wobei der ihn durchströmende Luftstrom im Anschluss in die Fahrgastzelle eingeleitet werden kann. Insbesondere kann es sich in sogenannten Gegenheizungsfällen um den Luftstrom handeln, der bereits den Verdampfer 116 durchströmt hat.

In der in Figur 1 dargestellten, ersten Schaltstellung sind die beiden Teilkreise 210, 220 der Kühlmittelleitungsanordnung 200 voneinander getrennt und separat betreibbar. Der Begriff "Schaltstellung" bezeichnet in diesem Kontext die Stellung einer nicht näher dargestellten Schaltventilanordnung in der Kühlmittelleitungsanordnung. In Figur 2 hingegen ist eine zweite Schaltstellung dargestellt, in der beide Teilkreise 210, 220 strömungstechnisch miteinander gekoppelt sind. Die jeweils durchströmten Leitungsbereiche sind als ausgezogene Linien dargestellt; die jeweils nicht durchströmten Leitungsbereiche sind als punktierte Linien dargestellt. Der Fachmann wird erkennen, dass in der zweiten Schaltstellung der Abgabe-Wärmeübertrager 216 von einem gemeinsamen, aus Strömungsanteilen beider Teilkreise 210, 220 gespeisten Kühlmittelstrom durchströmt wird. Dieser teilt sich hinter dem Abgabe-Wärmeübertrager 216 wieder in die beiden Teilkreise auf, sodass insbesondere Teilströme in den Kopplungs-Wärmeübertrager 11 und den Aufnahme-Wärmeübertrager 214 fließen. Die jeweiligen Strömungsanteile, die den gemeinsamen Strom durch den Abgabe-Wärmeübertrager 216 speisen bzw. in die sich der gemeinsame Strom hinter dem Abgabe-Wärmeübertrager 216 aufspaltet, sind hinsichtlich ihres Mengenverhältnisses bei geeigneter Auslegung der Schaltventilanordnung und/oder der Betriebsstärke der Kühlmittelpumpen 212, 222, bedarfsgerecht einstellbar. Bevorzugt ist dem Abgabe-Wärmeübertrager 216 ein Absperrorgan 218 vor- oder nachgeschaltet (in Figur 2 vorgeschaltet). Damit kann der den Teilkreisen 210, 220 gemeinsame Zweig, der den Abgabe-Wärmeübertrager 216 umfasst, gesperrt werden. Flussrichtungsumkehr in einem der Teilkreise 210, 220 führt zu einem Kühlmittelkreis ohne wesentlichen Wärmeverlust an die Umgebung, der zudem die Möglichkeit der Vorwärmung des Kühlmittels durch den Kältemittelkreis bietet. Diese Schaltung ist vor allem in extremen Kaltstart-Situationen hilfreich.

In Fällen, in denen das Kühlmittel kälter ist als das Kältemittel kann das Kühlmittel zur Wärmeabfuhr, d.h. zur Vorkühlung des Kältemittels genutzt werden, was die Kälteleistung bzw. Effizienz der Kältemittelleitungsanordnung erhöht. Dies kann zum einen in Hochlastsituationen der Kälteerzeugung (Stichwort: Sommerstau) nützlich sein. Ebenso kann dies bei Kaltstartszenarien auftreten, wenn die Kältemittelleitungsanordnung als Wärmepumpe und die vom Kompressor 110 erzeugte Wärme zur Vorheizung des Kabinenheizungs-Teilkreises 220 oder der in der zweiten Schaltstellung vereinigten Teilkreise 210, 220 genutzt wird.

In Fällen hingegen, in denen das Kühlmittel wärmer ist als das Kältemittel kann, bspw. zur Vermeidung einer Überhitzung, das Kältemittel als zusätzliche Wärmesenke genutzt werden. Der zusätzliche Kühleffekt ist jedoch in der Regel vergleichsweise gering, da die Gesamtleistung der Kältemittelleitungsanordnung deutlich geringer als die Gesamtleistung der Kühlmittelleitungsanordnung bemessen ist und typischerweise ca. 7 kW beträgt. Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Rahmen der Ansprüche ein breites Spektrum an Variationsmöglichkeiten an die Hand gegeben.

### Bezugszeichenliste

- 10: Temperieranordnung
- 11: Kopplungs-Wärmeübertrager
- 11a: kältemittelseitiger Teil von 11
- 11b: kühlmittelseitiger Teil von 11
- 12: Luftleitmittel
- 14: Verbrennungskraftmaschine
- 100: Kältemittelleitungsanordnung (Kältekreis)
- 110: Kompressor
- 112: Kondensator/Gaskühler
- 114: Entspannungsorgan / Drosselventil
- 116: Verdampfer
- 118: Trockner
- 200: Kühlmittelleitungsanordnung (Kühlkreis)
- 210: Motorkühlungs-Teilkreis von 200
- 212: Kühlmittelpumpe in 210
- 214: Aufnahme-Wärmeübertrager
- 216: Abgabe-Wärmeübertrager
- 218: Absperrorgan
- 220: Kabinenheizungs-Teilkreis von 200
- 222: Kühlmittelpumpe in 220

## Patentansprüche

1. Temperieranordnung für ein Kraftfahrzeug, umfassend
- eine Kühlmittelleitungsanordnung (200) zur Zirkulation von Kühlmittel, umfassend einen Aufnahme-Wärmeübertrager (214) zum Wärmeaustausch zwischen dem Kühlmittel und einem Antriebsaggregat (14)des Kraftfahrzeugs sowie einen Heizungs-Wärmeübertrager (224) zum Wärmeaustausch zwischen dem Kühlmittel und einem in eine Fahrgastzelle des Kraftfahrzeugs einleitbaren Luftstrom, sowie
- eine Kältemittelleitungsanordnung (100) zur Zirkulation von Kältemittel, umfassend einen Kompressor (110), einen dem Kompressor (110) in Strömungsrichtung des Kältemittels nachgeschalteten Kondensator/Gaskühler (112), ein dem Kondensator/Gaskühler (112) in Strömungsrichtung des Kältemittels nachgeschaltetes Entspannungsorgan (114) und einen dem Entspannungsorgan (114) in Strömungsrichtung des Kältemittels nachgeschalteten Verdampfer (116),
wobei die Kühlmittelleitungsanordnung (200) und die Kältemittelleitungsanordnung (100) mittels eines als Kühlmittel/Kältemittel-Wärmeübertrager ausgebildeten Kopplungs-Wärmeübertrager (11) thermisch miteinander gekoppelt sind,
und wobei die Kühlmittelleitungsanordnung (200) zwei Kühlmittelteilkreise, nämlich
- einen Motorkühlungs-Teilkreis (210), umfassend den Aufnahme-Wärmeübertrager (214), und
- einen Kabinenheizungs-Teilkreis (220), umfassend den Kopplungs-Wärmeübertrager (11) und den Heizungs-Wärmeübertrager (224), aufweist, die in einer ersten Schaltstellung einer Schaltventilanordnung voneinander getrennt und separat betreibbar sind,
**dadurch gekennzeichnet, dass**
- der Kopplungs-Wärmeübertrager (11) und der Kondensator/Gaskühler (112) in der Kältemittelleitungsanordnung (100) in Reihe zueinander geschaltet sind und
- der Motorkühlungs-Teilkreis (210) weiter einen Abgabe-Wärmeübertrager (216) zum Wärmeaustausch zwischen dem Kühlmittel und einer externen Wärmesenke aufweist, der in einer zweiten Schaltstellung der Schaltventilanordnung, in der die beiden Teilkreise (210, 220) der Kühlmittelleitungsanordnung (200) miteinander verbunden sind, als gemeinsames Element beider Teilkreise (210, 220) geschaltet ist und
- dass in der zweiten Schaltstellung der Schaltventilanordnung der Abgabe-Wärmeübertrager (216) sowohl dem Aufnahme-Wärmeübertrager (214) als auch dem Heizungs-Wärmeübertrager (224) in Strömungsrichtung des Kühlmittels nachgeschaltet ist.

2. Temperieranordnung nach Anspruch 1,
**dadurch gekennzeichnet,**
**dass** das Mengenverhältnis der aus dem Kabinenheizungs- und dem Motorkühlungs-Teilkreis (220, 210) stammenden Anteile des den Abgabe-Wärmeübertrager (216) in der zweiten Schaltstellung durchströmenden Kühlmittels einstellbar ist.

3. Temperieranordnung nach einem der vorangehenden Ansprüche,
**dadurch gekennzeichnet,**
**dass** in der zweiten Schaltstellung der Schaltventilanordnung sowohl der Kopplungs-Wärmeübertrager (11) als auch der Aufnahme-Wärmeübertrager (214) dem Abgabe-Wärmeübertrager (216) in Strömungsrichtung des Kühlmittels nachgeschaltet ist.

4. Temperieranordnung nach Anspruch 3,
**dadurch gekennzeichnet,**
**dass** das Mengenverhältnis der aus dem Abgabe-Wärmeübertrager (216) in den Aufnahme-Wärmeübertrager (214) einerseits und in den Kopplungs-Wärmeübertrager (11) andererseits strömenden Anteile des den Abgabe-Wärmeübertrager (216) in der zweiten Schaltstellung durchströmenden Kühlmittels einstellbar ist.

5. Temperieranordnung nach einem der vorangehenden Ansprüche,
**dadurch gekennzeichnet,**
**dass** der Verdampfer (116) als Luft/Kältemittel-Wärmeübertrager und der Heizungs-Wärmeübertrager (224) als Luft/Kühlmittel-Wärmeübertrager ausgebildet ist und beide luftseitig miteinander gekoppelt sind, wobei der Heizungs-Wärmeübertrager (224) dem Verdampfer (116) in Luftströmungsrichtung nachgeschaltet ist.

6. Temperieranordnung nach Anspruch 1,
**dadurch gekennzeichnet,**
**dass** dem Abgabe-Wärmeübertrager (216) ein Absperrorgan (218) unmittelbar vor- oder nachgeschaltet ist.

7. Verfahren zum Betrieb einer Temperiereinrichtung (10) nach einem der vorangehenden Ansprüche,
**dadurch gekennzeichnet,**
**dass** im Fall, dass am jeweiligen Eingang des Kopplungs-Wärmeübertragers (11) die Temperatur des Kühlmittels höher ist als die Temperatur des Kältemittels, die erste Schaltstellung der Schaltventilanordnung eingestellt wird und
im Fall, dass am jeweiligen Eingang des Kopplungs-Wärmeübertragers (11) die Temperatur des Kühlmittels niedriger ist als die Temperatur des Kältemittels, die zweite Schaltstellung der Schaltventilanordnung eingestellt wird.

## Claims

1. A temperature control arrangement for a motor vehicle, comprising
- a coolant line arrangement (200) for the circulation of coolant, comprising a receiving-heat exchanger (214) for heat exchange between the coolant and a drive unit (14) of the motor vehicle and a heating-heat exchanger (224) for heat exchange between the coolant and an air flow that can be introduced into a passenger compartment of the motor vehicle, and
- a refrigerant line arrangement (100) for the circulation of refrigerant, comprising a compressor (110), a condenser/gas cooler (112) connected downstream of the compressor (110) in the flow direction of the refrigerant, an expansion element (114) connected downstream of the condenser/gas cooler (112) in the flow direction of the refrigerant, and an evaporator (116) connected downstream of the expansion element (114) in the flow direction of the refrigerant,
wherein the coolant line arrangement (200) and the refrigerant line arrangement (100) are thermally coupled with one another by means of a coupling-heat exchanger (11) designed as a coolant/refrigerant-heat exchanger,
and wherein the coolant line arrangement (200) has two coolant sub-circuits, namely
- an engine cooling sub-circuit (210), comprising the receiving-heat exchanger (214), and
- a cab heating sub-circuit (220), comprising the coupling-heat exchanger (11) and the heating-heat exchanger (224),
which are separated from one another in a first switching position of a switching valve arrangement and can be operated separately,
**characterized in that**
- the coupling-heat exchanger (11) and the condenser/gas cooler (112) are connected in series with each other in the refrigerant line arrangement (100) and
- the engine cooling sub-circuit (210) in addition has a discharge-heat exchanger (216) for the heat exchange between the coolant and an external heat sink, which in a second switching position of the switching valve arrangement, in which the two sub-circuits (210, 220) of the coolant line arrangement (200) are connected to one another, is designed as a common element of both sub-circuits (210, 220) and
- that in the second switching position of the switching valve arrangement the discharge-heat exchanger (216) is connected downstream both of the receiving-heat exchanger (214) as well as of the heating-heat exchanger (224) in the flow direction of the coolant.

2. The temperature control arrangement according to Claim 1,
**characterized in**
**that** the quantitative proportion of the portions originating from the cab heating- and the engine cooling sub-circuits (220, 210) of the coolant flowing through the discharge-heat exchanger (216) in the second switching position can be adjusted.

3. The temperature control arrangement according to any one of the preceding claims,
**characterized in**
**that** in the second switching position of the switching valve arrangement both the coupling-heat exchanger (11) as well as the receiving-heat exchanger (214) is connected downstream of the discharge-heat exchanger (216) in the flow direction of the coolant.

4. The temperature control arrangement according to Claim 3,
**characterized in**
**that** the quantitative proportion of the portions flowing from the discharge-heat exchanger (216) into the receiving-heat exchanger (214), on the one hand, and into the coupling-heat exchanger (11), on the other hand, of the coolant flowing through the discharge-heat exchanger (216) in the second switching position can be adjusted.

5. The temperature control arrangement according to any one of the preceding claims,
**characterized in**
**that** the evaporator (116) is designed as an air/refrigerant-heat exchanger and the heating-heat exchanger (224) as an air/coolant-heat exchanger and both are coupled with one another on the air side, wherein the heating-heat exchanger (224) is connected downstream of the evaporator (116) in the air flow direction.

6. The temperature control arrangement according to Claim 1,
**characterized in**
**that** a shut-off element (218) is connected immediately upstream or downstream of the discharge-heat exchanger (216).

7. A method for operating a temperature control arrangement (10) according to any one of the preceding claims,
**characterized in**
**that** in the event that the temperature of the coolant is higher at the respective input of the coupling-heat exchanger (11) than the temperature of the refrigerant, the first switching position of the switching valve arrangement is adjusted and
in the event that the temperature of the coolant at the respective input of the coupling-heat exchanger (11) is lower than the temperature of the refrigerant, the second switching position of the switching valve arrangement is adjusted.

## Revendications

1. Dispositif de régulation de température pour un véhicule automobile, comprenant
- un dispositif de conduite de réfrigérant (200) pour la circulation de réfrigérant, comprenant un échangeur de chaleur de réception (214) pour l'échange de chaleur entre le réfrigérant et un groupe d'entraînement (14) du véhicule automobile ainsi qu'un échangeur de chaleur de chauffage (224) pour l'échange de chaleur entre le réfrigérant et un flux d'air pouvant être introduit dans un habitacle du véhicule automobile, ainsi
- qu'un dispositif de conduite de frigorigène (100) pour la circulation de frigorigène, comprenant un compresseur (110), un condenseur/refroidisseur de gaz (112) monté en aval du compresseur (110) dans le sens de l'écoulement du frigorigène, un organe de détente (114) monté en aval du condenseur/refroidisseur de gaz (112) dans le sens de l'écoulement du frigorigène, et un évaporateur (116) monté en aval de l'organe de détente (114) dans le sens de l'écoulement du frigorigène,
le dispositif de conduite de réfrigérant (200) et le dispositif de conduite de frigorigène (100) étant couplés thermiquement l'un à l'autre au moyen d'un échangeur de chaleur de couplage (11) constitué en tant qu'échangeur de chaleur réfrigérant/frigorigène,
et le dispositif de conduite de réfrigérant (200) comportant deux circuits partiels de réfrigérant, à savoir
- un circuit partiel de refroidissement de moteur (210), comprenant l'échangeur de chaleur de réception (214), et
- un circuit partiel de chauffage de cabine (220), comprenant l'échangeur de chaleur de couplage (11) et l'échangeur de chaleur de chauffage (224) qui sont séparés l'un de l'autre dans une première position de commutation d'un dispositif de soupape de commutation et peuvent être mis en œuvre séparément,
**caractérisé en ce que**
- l'échangeur de chaleur de couplage (11) et le condenseur/refroidisseur de gaz (112) sont montés en série l'un avec l'autre dans le dispositif de conduite de frigorigène (100), et
- le circuit partiel de refroidissement de moteur (210) comporte en outre un échangeur de chaleur de distribution (216) pour l'échange de chaleur entre le réfrigérant et un puits de chaleur externe qui, dans une deuxième position de commutation du dispositif de soupape de commutation dans laquelle les deux circuits partiels (210, 220) du dispositif de conduite de réfrigérant (200) sont raccordés l'un à l'autre, est monté en tant qu'élément conjoint des deux circuits partiels (210, 220), et
- **en ce que**, dans la deuxième position de commutation du dispositif de soupape de commutation, l'échangeur de chaleur de distribution (216) est, dans le sens d'écoulement du réfrigérant, monté en aval de l'échangeur de chaleur de réception (214) ainsi que de l'échangeur de chaleur de chauffage (224).

2. Dispositif de régulation de température selon la revendication 1,
**caractérisé en ce que**
la proportion des fractions du réfrigérant balayant l'échangeur de chaleur de distribution (216) dans la deuxième position de commutation et provenant du circuit partiel de chauffage de cabine et de refroidissement de moteur (220, 210) peut être réglée.

3. Dispositif de régulation de température selon l'une des revendications précédentes,
**caractérisé en ce que**,
dans la deuxième position de commutation du dispositif de soupape de commutation, aussi bien l'échangeur de chaleur de couplage (11) que l'échangeur de chaleur de réception (214) sont montés en aval de l'échangeur de chaleur de distribution (216) dans le sens d'écoulement du réfrigérant.

4. Dispositif de régulation de température selon la revendication 3,
**caractérisé en ce que**
la proportion des fractions du réfrigérant balayant l'échangeur de chaleur de distribution (216) dans la deuxième position de commutation et s'écoulant à partir de l'échangeur de chaleur de distribution (216) vers l'échangeur de chaleur de réception (214) d'un côté et vers l'échangeur de chaleur de couplage (11) de l'autre côté peut être réglée.

5. Dispositif de régulation de température selon l'une des revendications précédentes,
**caractérisé en ce que**
l'évaporateur (116) est constitué en tant qu'échangeur de chaleur air/frigorigène, et l'échangeur de chaleur de chauffage (224) est constitué en tant qu'échangeur de chaleur air/réfrigérant, et les deux sont couplés l'un à l'autre côté air, l'échangeur de chaleur de chauffage (224) étant monté en aval de l'évaporateur (116) dans le sens d'écoulement du réfrigérant.

6. Dispositif de régulation de température selon la revendication 1,
**caractérisé en ce**
**qu'**un organe d'arrêt (218) est monté directement en amont ou en aval de l'échangeur de chaleur de distribution (216).

7. Procédé de fonctionnement d'un équipement de régulation de température (10) selon l'une des revendications précédentes, **caractérisé en ce que**,
au cas où, dans l'entrée respective de l'échangeur de chaleur de couplage (11), la température du réfrigérant est supérieure à la température du frigorigène, la première position de commutation du dispositif de soupape de commutation est réglée et,
au cas où, à l'entrée respective de l'échangeur de chaleur de couplage (11), la température du réfrigérant est inférieure à la température du frigorigène, la deuxième position de commutation du dispositif de soupape de commutation est réglée.
